# EUROPÄISCHE PATENTSCHRIFT

(11) **EP 1 996 387 B1**
(45) Veröffentlichungstag und Bekanntmachung des Hinweises auf die Patenterteilung: **05.10.2016**
(21) Anmeldenummer: 06723642.2
(22) Anmeldetag: 23.03.2006
(51) Int. Cl.: B29C 65/06

(54) **VERFAHREN UND VORRICHTUNG ZUM VERSCHWEISSEN VON KUNSTSTOFFEILEN**
PROCESS AND APPARATUS FOR THE WELDING OF PLASTICS PARTS
PROCEDE ET DISPOSITIF DE SOUDAGE DE PIECES EN MATIERE SYNTHETIQUE

(43) Veröffentlichungstag der Anmeldung: 03.12.2008
(60) Teilanmeldung: 14189664.7
(73) Patentinhaber: Hella KGaA Hueck & Co., 59552 Lippstadt (DE)
(72) Erfinder: SIEBEN, Manuel, 34414 Warburg (DE); SCHÜTTE, Andreas, 33142 Büren (DE)
(74) Vertreter: Ostermann, Thomas
(86) Internationale Anmeldenummer: PCT/EP2006/002650
(87) Internationale Veröffentlichungsnummer: WO 2007/110085

(56) Entgegenhaltungen:
- DE-A1- 10 122 802
- DE-A1- 10 203 090
- DE-U- 6 601 613

## Beschreibung

Die Erfindung betrifft ein Verfahren zum Verschweißen von thermoplastischen Kunststoffteilen nach dem Oberbegriff des Patentanspruchs 1.

Aus der DE 35 05 272 A1 ist ein Verfahren zum Verschweißen von thermoplastischen Kunststoffteilen bekannt, wobei die zum Verschweißen von Kunststoffteilen erforderliche Schweißenergie durch Reibung (Vibrationsschweißen) erzeugt wird. Dabei werden die zu verbindenden Kunststoffteile an zueinander gekehrten Verbindungsstellen derart mit einer vorgegebenen Schwingamplitude bzw. Oszillationsfrequenz aneinander gerieben, dass die Verbindungsstellen erwärmt und plastifiziert werden. Es erfolgt ein vollständiges Plastifizieren der gesamten Verbindungsstelle wobei ein so genannter quasistationärer Schmelzefluss erreicht wird.

Nachteilig an dem bekannten Reibschweißen bzw. Vibrationsschweißen ist, dass die flächigen Verbindungsstellen der Kunststoffteile im Wesentlichen parallel zu ihrer Erstreckung bzw. unter einem relativ kleinen Oszillationswinkel relativ zueinander bewegt werden müssen. Hierdurch ist die Geometriefreiheit der zu verbindenden Kunststoffteile sehr stark eingeschränkt. Üblicherweise ist der einzuhaltende maximale Oszillationswinkel zwischen der Erstreckung der flächigen Verbindungsstellen der Kunststoffteile und der Oszillationsrichtung auf 10° begrenzt.

Aus der DE 101 22 802 A1 ist ein Verfahren zum Verschweißen von thermoplastischen Kunststoffteilen bekannt, bei dem die zu verbindenden Verbindungsstellen der Kunststoffteile vor dem Aufbau einer Schmelzschicht mittels Vibrationsschweißen die Verbindungsstellen vorerwärmt werden. Die Vorerwärmung der Verbindungsstellen erfolgt jedoch mittels einer Grenzflächenreibung und damit einer Trockenreibung, so dass noch keine Schmelzeschicht entsteht. Durch die Grenzflächenreibung der noch festen Verbindungsstellen kann eine ansonsten beim Vibrationsschweißen vorkommende Abrieb- und Fusselbildung an den Verbindungsstellen vermieden werden.

Aus der DE 102 03 090 A1 ist ein Verfahren zum Verschweißen von thermoplastischen Kunststoffteilen bekannt, bei der eine der zueinander gekehrten Verbindungsstellen der Kunststoffteile vorerwärmt wird, bevor der eigentliche Schweißvorgang unter Relativbewegung der Verbindungsstellen zueinander mit einer vorgegebenen Amplitude und mit einer vorgegebenen Oszillationsfrequenz in einer Oszillationsrichtung erfolgt (Reibschweißvorgang). Das bekannte Verfahren bezieht sich auf das Verschweißen von Kunststoffteilen in einer vorgegebenen Schweißebene.

Aufgabe der vorliegenden Erfindung ist es, ein Verfahren zum Verschweißen von thermoplastischen Kunststoffteilen derart weiterzubilden, dass relativ stark gekrümmte Bauteile mittels Vibrationsschweißens unter Bildung einer qualitativ hochwertigen Fügeverbindung zusammengefügt werden können.

Zur Lösung der Aufgabe weist das erfindungsgemäße Verfahren die Merkmale des Patentanspruchs 1 auf.

Der besondere Vorteil der Erfindung besteht darin, dass Kunststoffteile komplexer Geometrien entlang der Verbindungsstellen verschweißt werden können, wobei eine dekorative und qualitativ hochwertige Fügeverbindung entsteht. Grundgedanke der Erfindung ist es, dass bereits vor dem Vibrationsschweißvorgang an mindestens einer Verbindungsstelle des Kunststoffteils eine Schmelzschicht erzeugt wird, so dass zu Beginn des Vibrationsschweißvorgangs ein Schmelzefilm vorhanden ist und somit das Vibrationsschweißen unter einem relativ steilen Oszillationswinkel (Anschwingwinkel) erfolgen kann. Hierdurch können stark gekrümmte Kunststoffteile verschweißt werden, die sich entlang der Schweißnaht um einen Winkel von bis zu 45° krümmen.

Nach der Erfindung werden die Verbindungsstellen der zu verbindenden Kunststoffteile derart vorgewärmt, dass sich jeweils eine gesamte Schmelzschicht mit einer Dicke von mindestens 0,5 mm bildet. Auf diese Weise ergibt sich zu Beginn des Vibrationsschweißens eine Schmelzdicke von 1 mm, so dass die Schwingweite (doppelte Amplitude) der Oszillationsbewegung beim Vibrationsschweißen von etwa 0,9 mm auch bei relativ stark gekrümmten Kunststoffteilen eingehalten werden kann.

Ein Ausführungsbeispiel der Erfindung wird nachfolgend anhand der Zeichnungen näher erläutert:

Es zeigen:
- Figur 1: einen teilweisen Querschnitt durch zwei zu verbindende Kunststoffteile mit jeweils einer Schmelzschicht,

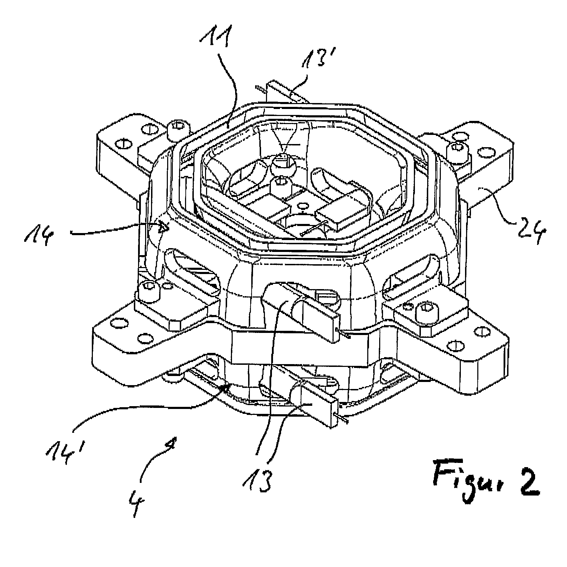

- Figur 2: eine perspektivische Darstellung einer Heizeinrichtung zur Vorerwärmung der zu verbindenden Kunststoffteile,

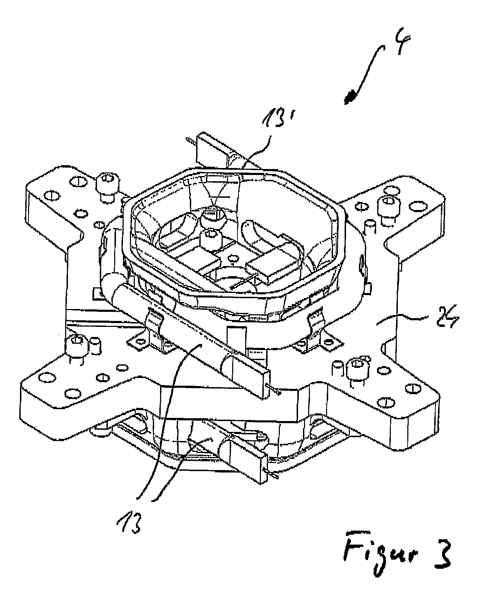

- Figur 3: eine perspektivische Darstellung der Heizeinrichtung gemäß Figur 2 mit teilweise freigelegten Strahlungsquellen,

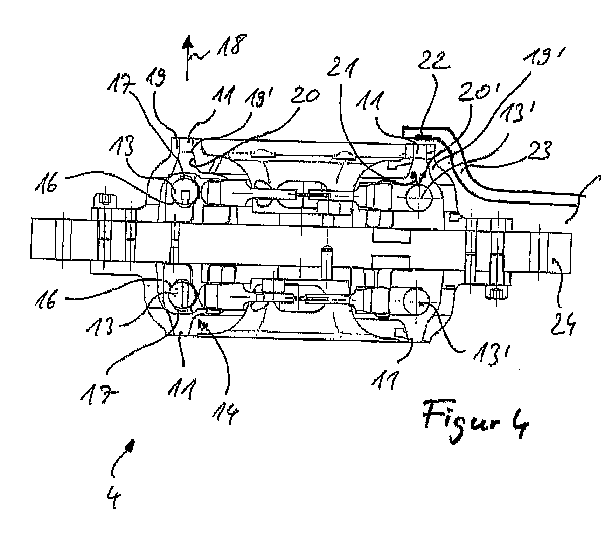

- Figur 4: einen Querschnitt durch die Heizeinrichtung im Bereich einer Maske
- Figur 5: ein Steuerungsdiagramm für die Heizeinrichtung und
- Figur 6: eine Draufsicht auf eine Konfiguration von zwei schneckenförmig in der Heizeinrichtung angeordneten Rohrstrahlern.

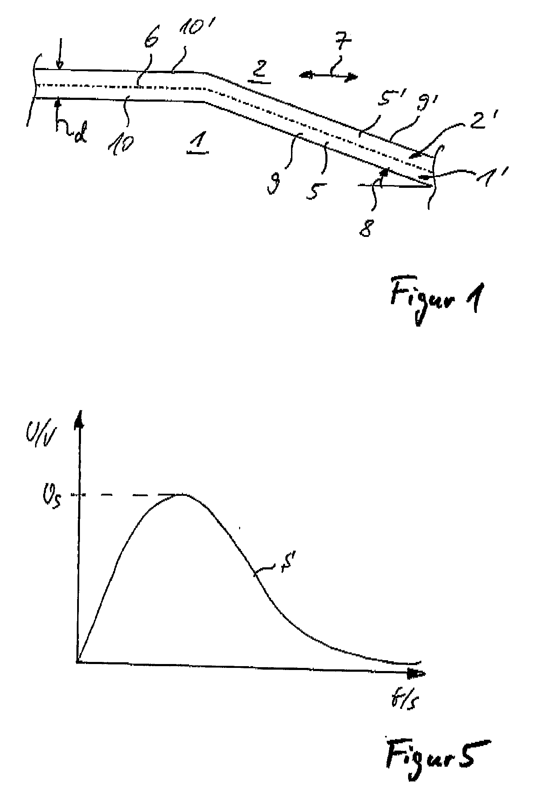

Das erfindungsgemäße Verfahren zum Verschweißen von thermoplastischen Kunststoffteilen kann beispielsweise zum Verschweißen von Kunststoffteilen im Automobilbereich oder Haushaltsgerätebereich eingesetzt werden. Im vorliegenden Ausführungsbeispiel gemäß Figur 1 erfolgt eine Verbindung zwischen einem Gehäuseteil 1 (erstes Kunststoffteil) und einer Abschlussscheibe 2 (zweites Kunststoffteil) eines Scheinwerfers für Kraftfahrzeuge.

Gemäß einem ersten Verfahrensschritt werden das in einem Abstand zueinander angeordnete Gehäuseteil 1 und die Abschlussscheibe 2 an einer zueinander gekehrten Verbindungsstelle 1' bzw. 2' mittels einer in den weiteren Figuren dargestellten Heizeinrichtung 4 derart vorgewärmt, dass sich an der Verbindungsstelle 1', 2' eine Schmelzschicht 5 bzw. 5' von jeweils einer Dicke von 0,5 mm ergibt.

Nachfolgend werden das Gehäuseteil 1 und die Abschlussscheibe 2 derart aufeinander zu bewegt, bis sich die Schmelzschicht der Verbindungsstelle 1' bzw. die Schmelzschicht 5' der Verbindungsstelle 2' in einer Fügeebene 6 berühren. Die gesamte Schmelzschichtdicke d, die sich aus den einzelnen Schmelzschichten 5 und 5' zusammensetzt, beträgt nun 1 mm.

In einem weiteren Verfahrensschritt werden das Gehäuseteil 1 und die Abschlussscheibe 2 entlang einer Oszillationsrichtung 7 mit einer Amplitude von 0,45 mm und einer vorgegebenen Oszillationsfrequenz relativ zueinander bewegt (Vibrationsschweißen), wobei unter Erzeugung einer Scherleistung eine Durchmischung der in den Schmelzschichten 5, 5' enthaltenen Schmelze erfolgt. Dabei werden die Verbindungsstellen 1', 2' unter einem Fügedruck in Höhe von 0,5 bis 8,0 MPa aufeinander gedrückt. Bereits vor dem Aufeinanderdrücken sind die Verbindungsstellen 1', 2' vollständig plastifiziert, so dass die ansonsten vorhanden instationäre Schmelzebildung des Vibrationsschweißens nicht stattfindet. Mit Beginn des Vibrationsschweißens ist die Schmelze bereits gebildet.

In einem abschließenden Verfahrensschritt werden die Verbindungsstellen 1', 2' abgekühlt, wobei noch ein Fügedruck ohne Vibrationsbewegung bis zur vollständigen Erstarrung der Schmelze aufrechterhalten wird.

Wie aus Figur 1 zu ersehen ist, ist die Schwingweite (doppelte Amplitude) der Oszillationsbewegung kleiner als die gesamte Schmelzschichtdicke d, so dass Kunststoffteile mit gekrümmten Wandungen miteinander verschweißt werden können. Im vorliegenden Ausführungsbeispiel bildet die Oszillationsrichtung 7 zu den Wandungen des Gehäuseteils 1 bzw. der Abschlussscheibe 2 einen spitzen Anschwingwinkel 8, der beispielsweise 45° betragen kann.

Im vorliegenden Ausführungsbeispiel weisen das Gehäuseteil 1 und die Abschlussscheibe 2 parallel zueinander verlaufende Flächenabschnitte 9 bzw. 9' auf, die zu der Oszillationsrichtung 7 einen spitzen Winkel 8 bilden. Der weitere Flächenabschnitt 10, 10' des Gehäuseteils 1 bzw. der Abschlussscheibe 2 verläuft parallel zu der Oszillationsrichtung 7.

Die Vorerwärmung der Verbindungsstellen 1', 2' des Gehäuseteils 1 bzw. der Abschlussscheibe 2 erfolgt mittels der Heizeinrichtung 4, die den Verbindungsstellen 1', 2' über einen äußeren Strahlungsaustrittsspalt 11 die hierzu erforderliche Strahlungsleistung zukommen lässt. Die Kontur des äußeren Strahlungsaustrittsspalts 11 entspricht dabei dem Verlauf der Schweißnaht.

Die Heizeinrichtung 4 wird derart gesteuert bzw. geregelt, dass die Verbindungsstellen 1', 2' des Gehäuseteils 1 bzw. der Abschlussscheibe 2 lediglich bis in einen Bereich der Schmelztemperatur entsprechend einer Steuerkurve S aufgeschmolzen werden. In dem Diagramm gemäß Figur 5 ist die elektrische Spannung U in Volt auf der Ordinate und die Zeit t in Sekunden auf der Abszisse aufgetragen. Es erfolgt ein relativ steiler Anstieg der Heizspannung bis zu einem Wert U_{S}, der zur Schmelztemperatur der Materialien korrespondiert.

Nachfolgend wird die Heizleistung der Heizeinrichtung 4 derart entsprechend einer e-Funktion heruntergeregelt, wobei der Heizvorgang etwa nach 6 Sekunden abgeschlossen ist. Durch das Steuern bzw. Regeln der Heizleistung wird ein Überheizen der Verbindungsstellen 1', 2', was zu einer unerwünschten Ausgasung des Materials führen kann, verhindert.

Die Heizeinrichtung 4 weist ein Gehäuse 12 auf, in dem zu beiden Seiten eines mittleren Grundträgers 24 jeweils als Strahlungsquelle 2 zwei Infrarot-Rohrstrahler 13, 13' sowie als Strahlungsführungsmittel eine Maske 14 untergebracht sind. Die Rohrstrahler 13, 13' sind schneckenförmig angeordnet, wobei sie in einem Endbereich 15 derselben längsseitig entlang von Stoßkanten unmittelbar aneinander liegen.

Zur Bereitstellung der erforderlichen Energiedichte ist der Rohrstrahler 13, 13' als ein Glasrohrstrahler ausgebildet, wobei sich eine Glühwendel innerhalb des Glasröhrens in einer Schutzatmosphäre befindet.

Ein Tubus der Rohrstrahler 13, 13' ist umfangsseitig mit einer Reflektorfläche 16 aus Goldmaterial beschichtet, wobei ein innerer Strahlungsaustrittsspalt 17, der dem äußeren Strahlungsaustrittsspalt 11 zugewandt ist, freigelassen wird. Der innere Strahlungsaustrittsspalt 17 erstreckt sich in einem spitzen Winkel einer Breite in einem Bereich von 3 mm bis 8 mm, vorzugsweise in einer Breite von 4 mm bis 5 mm.

Die Maske 14 weist zwei sich in Hauptstrahlungsrichtung 18 verjüngende Maskenflächen 19, 19' auf, deren Enden den äußeren Strahlungsaustrittsspalt 11 begrenzen. Die Breite des äußeren Strahlungsaustrittsspalts 11 beträgt etwa 1, 5 mm. Der äußere Strahlungsaustrittsspalt 11 kann in einem Bereich von 1 mm bis 2 mm liegen.

Die Maskenflächen 19, 19' sind innenseitig mit einer Reflexionsfläche 20 versehen, so dass die aus dem Rohrstahler 13, 13' austretende Strahlung 21 - wenn sie nicht direkt durch den äußeren Strahlungsaustrittspalt 11 nach außen tritt - an den Reflexionsflächen 20, 20' reflektieren und innerhalb der Maske so lange umher vagabundieren, bis sie durch den äußeren Strahlungsaustrittsspalt 11 in Richtung der Verbindungsstelle 1', 2' austreten. Auf diese Weise erfolgt eine Fokussierung der Strahlung 21 auf die Verbindungsstelle 1', 2'.

Die Reflexionsfläche 20, 20' der Maskenfläche 19, 19' kann als eine hochglanzpolierte Metallfläche ausgebildet sein. Durch Mehrfachreflexion an den Innenwänden der Maske 14 erfolgt eine Ausrichtung der Strahlung 21 in Richtung der Verbindungsstellen 1', 2'.

Hierdurch ergibt sich ein gleichmäßiger Energieeintrag über den gesamten Schweißnahtverlauf.

Dadurch, dass eine Maskenfläche 19' unmittelbar angrenzend zu einem in einem rechten Winkel zu der Verbindungsstelle 22 orientierten Flächenabschnitt 23 der Abschlussscheibe oder des Gehäuses 1 angeordnet ist, ist der dekorative Flächenabschnitt 23 während des Heizvorgangs thermisch geschützt angeordnet.

Der Rohrstrahler 13, 13' bildet einen Tubus, der in einer Rinne der Maske 14 vorzugsweise in einem konstanten Abstand zu den Verbindungsstellen 1', 2' angeordnet ist.

Im vorliegenden Ausführungsbeispiel ist eine Zwillingsmaske mit einer von einem mittleren Grundträger 24 auf eine Seite orientierten Maske 14 und einer gegenüberliegenden Maske 14' angeordnet, wobei die eine Maske 14 zum Vorheizen der Verbindungsstelle 1' des Gehäuseteils 1 und die andere Maske 14' zum Vorheizen der Verbindungsstelle 2' der Abschlussscheibe 2 dient. Die beiden Masken 14, 14' sind gleichartig ausgebildet, wobei die äußeren Strahlungsaustrittsspalte 11 höhenversetzt zueinander angeordnet sind.

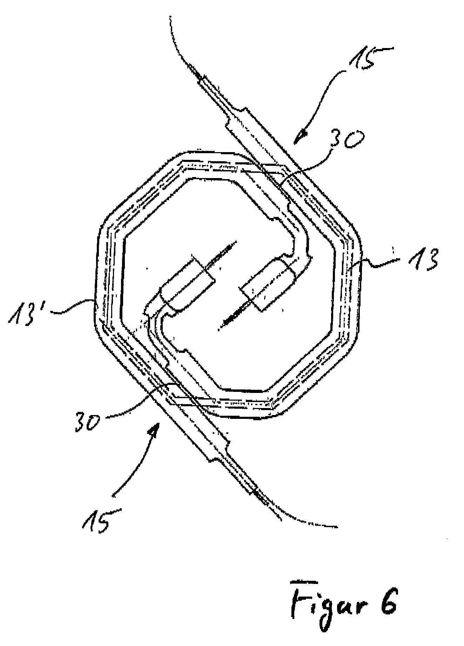

Die Rohrstrahler 13, 13' sind jeweils U-förmig ausgebildet, wobei sie jeweils in einem Endbereich 15 derselben unter Bildung von Stoßkanten 30 unmittelbar aneinander liegen, wie in Figur 6 dargestellt. Es ergibt sich somit eine achteckige Konfiguration der Rohrstrahler 13, 13' die die Nachbildung eines achteckigen Schweißsteges (Schweißnaht) ermöglichen. Somit korrespondieren der innere Strahlungsaustrittsspalt 17 sowie der äußere Strahlungsaustrittsspalt 11 zu dem Verlauf der Rohrstrahler 13, 13' und geben damit den Verlauf der Schweißnaht vor. Vorteilhaft ergibt sich hierdurch ein geschlossener Fügeverlauf.

Durch die Ausbildung der Maske 14, 14' mit den im Bereich der Rohrstrahler 13, 13' bauchig angeordneten Reflektorflächen 16, sich die in Abstrahlrichtung verjüngend erstrecken, erfolgt eine Kompensation insbesondere des in dem Endbereich 15 vorliegenden Energieüberschusses in Folge der zwei nebeneinander angeordneten Abschnitte der Rohrstrahler 13, 13'. Die Reflexionsflächen 20, 20' und die Mantelflächen 19, 19' der Maske 14, 14' sind im Abschnitt der Endbereiche 15 derart ausgebildet, dass die durch den äußeren Strahlungsaustrittsspalt 17 abgegebene Strahlungsenergie einen vorgegebenen Schwellwert nicht übersteigt.

## Patentansprüche

1. Verfahren zum Verschweißen von thermoplastischen Kunststoffteilen, wobei mindestens eine Verbindungsstelle (1', 2') der zu verbindenden Kunststoffteile (1, 2) vorgewärmt wird, so dass sich eine Schmelzschicht (5, 5') vorgegebener Schichtdicke bildet, und wobei nachfolgend die Verbindungsstellen (1', 2') der Kunststoffteile (1, 2) mit einer vorgegebenen Amplitude und mit einer vorgegebenen Oszillationsfrequenz relativ zueinander bewegt werden, wobei die Kunststoffteile (1, 2) senkrecht zu wenigstens einem Flächenabschnitt (9, 9') der Verbindungsstelle (1', 2') unter gegenseitigem Berühren der Verbindungsstellen (1', 2') und/oder unter Vermischen der in der Schmelzschicht (5, 5') enthaltenen Schmelze relativ zueinander bewegt werden, **dadurch gekennzeichnet, dass** die Amplitude der Oszillationsbewegung der Kunststoffteile (1, 2) kleiner ist als die halbe Gesamtdicke der Schmelzschichten der Verbindungsstellen (1', 2') und dass die Verbindungsstellen (1', 2') der Kunststoffteile (1, 2) derart vorgewärmt werden, dass sich eine Schmelzschicht einer Schmelzschichtdicke von mindestens 0,5 mm bildet, und dass die Kunststoffteile (1, 2) senkrecht zu dem wenigstens einen Flächenabschnitt(9, 9') der Verbindungsstelle (1', 2') relativ zueinander bewegt werden, so dass die Amplitude der Oszillationsbewegung der Kunststoffteile (1, 2) kleiner als oder gleich 0,45 mm beträgt.

2. Verfahren nach Anspruch 1, **dadurch gekennzeichnet, dass** die Verbindungsstellen (1', 2') von zwei Kunststoffteilen (1, 2) unter Bildung jeweils einer Schmelzschicht (5, 5') auf eine Schmelztemperatur des Kunststoffmaterials vorgewärmt werden, dann die Verbindungsstellen (1', 2') der Kunststoffteile (1, 2) aufeinander zu bewegt werden, bis sich die Schmelzschichten (5, 5') der Kunststoffteile (1, 2) berühren und dass dann die Verbindungsstellen (1', 2') relativ zueinander bewegt werden unter Erzeugung einer Schererwärmung.

## Claims

1. A process for the welding of thermoplastic parts, wherein at least one connection point (1', 2') of the plastic parts (1, 2) to be connected is preheated, so that a molten layer (5, 5') with a predetermined layer thickness will form, and wherein subsequently the connection points (1', 2') of the plastic parts (1, 2) are moved relative to each other with a predetermined amplitude and with a predetermined oscillation frequency, wherein the plastic parts (1, 2) are moved relative to each other at right angles to at least one surface portion (9, 9') of the connection point (1', 2') while the connection points (1', 2') are in contact with one another and/or while mixing the melt contained in the molten layer (5, 5'), **characterized in that** the amplitude of the oscillatory motion of the plastic parts (1, 2) is less than half the total thickness of the molten layers of the connection points (1', 2'), and **in that** the connection points (1', 2') of the plastic parts (1, 2) are preheated such that a molten layer with a molten layer thickness of at least 0.5 mm will form, and **in that** the plastic parts (1, 2) are moved relative to each other at right angles to the at least one surface portion (9, 9') of the connection point (1', 2'), so that the amplitude of the oscillatory motion of the plastic parts (1, 2) is smaller than or equal to 0.45 mm.

2. The process according to claim 1, **characterized in that** the connection points (1', 2') of two plastic parts (1, 2) are preheated to a melting temperature of the plastic material, thus producing a molten layer (5, 5') at each of them, then the connection points (1', 2') of the plastic parts (1, 2) are moved towards each other until the molten layers (5, 5') of the plastic parts (1, 2) make contact with each other, and that then the connection points (1', 2') are moved relative to each other, causing them to heat up due to a shearing motion.

## Revendications

1. Procédé de soudage de pièces en matière synthétique thermoplastique, sachant qu'au moins un point de liaison (1'. 2') des pièces en matière synthétique (1, 2) est préchauffé de sorte qu'une couche de fusion (5, 5') d'une épaisseur prédéterminée soit formée, et que les points de liaison (1'. 2') des pièces en matière synthétique (1, 2) soient mus par rapport les uns aux autres avec une amplitude prédéterminée et avec une fréquence d'oscillation prédéterminée, sachant que les pièces en matière synthétique (1, 2) sont déplacées par rapport l'une à l'autre, perpendiculairement à au moins une section de surface (9, 9') des points de liaison (1'. 2') avec entrée en contact mutuelle des points de liaison (1'. 2') et / ou avec mélange de la fonte contenue dans la couche de fusion (5, 5'), **caractérisé en ce que** la fréquence du mouvement d'oscillation des pièces en matière synthétique (1, 2) est inférieure à la moitié de l'épaisseur totale des couches de fusion des points de liaison (1'. 2') et que les points de liaison (1'. 2') des pièces en matière synthétique (1, 2) sont préchauffés de sorte qu'une couche de fusion d'une épaisseur de couche de fusion d'au moins 0,5 mm soit formée et que les pièces en matière synthétique (1, 2) sont déplacées par rapport l'une à l'autre, perpendiculairement à moins une section de surface (9, 9') des points de liaison (1'. 2') de sorte que l'amplitude du mouvement d'oscillation des pièces en matière synthétique (1, 2) soit inférieur ou égal à 0,45 mm.

2. Procédé selon la revendication 1, **caractérisé en ce que** les points de liaison (1', 2') de deux pièces en matière synthétique (1, 2) sont préchauffés à une température de fusion de la matière synthétique en formant chacun une couche de fusion (5, 5'), les points de liaison (1'. 2') des pièces en matière synthétique (1, 2) étant ensuite mus les uns vers les autres jusqu'à ce que les couches de fusion (5, 5') des pièces en matière synthétique (1, 2) se touchent et que les points de liaison (1'. 2') sont ensuite mus les uns par rapport aux autres, en générant un réchauffement par cisaillement.
